# EUROPEAN PATENT SPECIFICATION

(11) **EP 1 125 847 B1**
(45) Date of publication and mention of the grant of the patent: **10.11.2004**
(21) Application number: 00830104.6
(22) Date of filing: 15.02.2000
(51) Int. Cl.: B65B 51/30, B65B 61/10

(54) **Packaging unit for continuously producing sealed packages of pourable food products**
Verpackungsanlage zum kontinuierlichen Herstellen von versiegelten Verpackungen von schüttfähigen Nahrungsmitteln
Machine d' emballage pour la fabrication continue d' emballages scelles de produits alimentaires versables

(43) Date of publication of application: 22.08.2001
(73) Proprietor: Tetra Laval Holdings & Finance S.A., 1009 Pully (CH)
(72) Inventor: Vaccari, Luigi, 41100 Modena (IT)
(74) Representative: Jorio, Paolo

(56) References cited:
- EP-A- 0 226 693
- EP-A- 0 887 263
- US-A- 3 300 944
- US-A- 3 388 525

## Description

The present invention relates to a packaging unit for continuously producing sealed packages of pourable food products from a tube of packaging material.

Many pourable food products, such as fruit juice, pasteurized or UHT (ultra-high-temperature-processed) milk, wine, tomato sauce, etc., are sold in packages made of sterilized packaging material.

A typical example of such a package is the parallelepiped-shaped package for liquid or pourable food products known as Tetra Brik Aseptic (registered trademark), which is formed by folding and sealing laminated strip packaging material. The laminated packaging material comprises layers of fibrous material, e.g. paper, covered on both sides with heat-seal plastic material, e.g. polyethylene, and, in the case of aseptic packages, the side of the packaging material eventually contacting the food product in the package also has a layer of barrier material, e.g. an aluminium sheet, which is also covered with a layer of heat-seal plastic material.

As is known, such packages are made on fully automatic packaging units, on which a continuous tube is formed from the packaging material supplied in strip form; the strip of packaging material is sterilized on the packaging unit itself, e.g. by applying a chemical sterilizing agent, such as a hydrogen peroxide solution, which, after sterilization, is removed, e.g. vaporized by heating, from the surfaces of the packaging material; and the strip of packaging material so sterilized is maintained in a closed sterile environment, and is folded and sealed longitudinally to form a vertical tube.

The tube is filled from above with the sterilized or sterile-processed food product, and is sealed by pairs of jaws and eventually cut at equally spaced transverse bands to form pillow packs, which are then folded mechanically to form the finished, e.g. parallelepiped-shaped, packages.

As described for example in EP-A-0 887 273, packaging units of the above type are known to comprise two forming chains defining respective endless paths and respectively defined by a number of articulated jaws and counterjaws. The two paths have respective substantially straight branches facing and parallel to each other, and between which the tube of packaging material is fed, and along which the jaws cooperate with the corresponding counterjaws to grip and heat seal the tube at a number of successive transverse bands. The pillow packs so formed are separated at a cutting station located downstream from the forming chains and comprising two counter-rotating rollers, one of which comprises a number of cutters.

This solution provides for producing reliable, good-quality packages at an extremely fast output rate.

Nevertheless, particularly in the case of large-size packages, e.g. of a liter or more, a demand exists for improved cutting precision, which may be impaired by misalignment of the sealing bands with respect to the rotary cutters, on account of the weight of the packages suspended between the forming chains and the cutting station.

Theoretically, the problem can be solved by incorporating the cutters in the jaws, as described, for example, in CD-A-592 747 and US-A-3 300 944, which provide for directly operating the cutters - mounted to slide inside the jaws and having respective cam-follower rollers - by means of cams fixed to the machine structure. More specifically, each cam comprises a substantially square-shaped stop member located at the cutting region and defined by an interacting surface sloping with respect to the feed path of the tube and which, on impact with the cam-follower, moves the cutters into a cutting position wherein the cutting edges of the cutters project from the respective jaws to cut the tube of packaging material. The jaws also comprise one or more return springs for restoring the cutters, once the tube is cut, to a rest position in which the cutters are housed entirely inside the respective jaws.

A major drawback of the above solution lies in the cam-followers being subjected, on impact with the oblique interacting surfaces of the stop members, to forces with transverse components, thus resulting in abnormal stress on, and premature wear of, the cutters.

It is an object of the present invention to provide a packaging unit designed to eliminate the aforementioned drawbacks typically associated with known units.

According to the present invention, there is provided a packaging unit as defined in Claim 1.

A preferred, non-limiting embodiment of the present invention will be described by way of example with reference to the accompanying drawings, in which:
Figure 1 shows a schematic side view of a packaging unit in accordance with the present invention;
Figure 2 shows a view in perspective of a jaw and corresponding counterjaw of the Figure 1 unit;
Figure 3 shows an underside half section of the Figure 2 counterjaw;
Figures 4 and 5 show sections along line IV-IV in Figure 3, in two different operating positions.

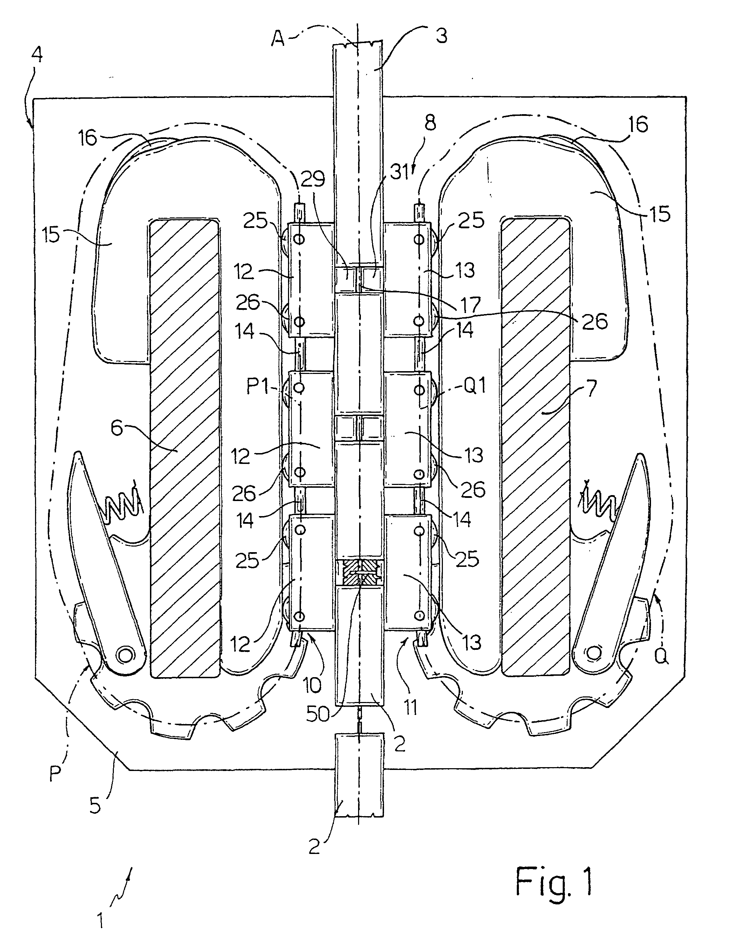

Number 1 in Figure 1 indicates as a whole a packaging unit for continuously producing sealed packages 2 of a pourable food product, such as pasteurized or UHT milk, fruit juice, wine, etc., from a vertical tube 3 of packaging material.

Tube 3 is formed in known manner, upstream from unit 1, by longitudinally folding and sealing a strip of heat-seal sheet material, and is filled from above with the sterilized or sterile-processed food product.

Unit 1 comprises a frame 4 defined by two sides 5 (only one shown) and by two transverse walls 6, 7 parallel to each other and fixed rigidly between sides 5 to define, with sides 5, a compartment 8; and two forming chains 10, 11 supported by frame 4 and respectively comprising first jaws 12 - hereinafter referred to simply as "jaws 12" - and second jaws or counterjaws 13, which cooperate with one another and interact with the tube 3 of packaging material fed through compartment 8 along a vertical path A.

Chains 10 and 11 define respective endless paths P, Q along which jaws 12 and counterjaws 13 are fed. Paths P, Q extend respectively about walls 6 and 7 of frame 4, and comprise respective substantially straight work portions P1, Q1 parallel to each other, adjacent to the feed path A of tube 3, and extending substantially symmetrically on opposite sides of path A, so that respective equally spaced transverse bands 17 of tube 3 are gripped under pressure between pairs of jaws 12 and corresponding counterjaws 13.

Jaws 12 and counterjaws 13 form an integral part, and define alternate links, of respective chains 10, 11, and are connected to one another in articulated manner by pairs of rods 14.

The supporting, actuating and guide devices of chains 10, 11 are known, e.g. from EP-A-0 887 263, and therefore not described in detail. Suffice it to say that the law of motion of jaws 12 and counterjaws 13 is defined by cams 15, 16 fitted to walls 6, 7.

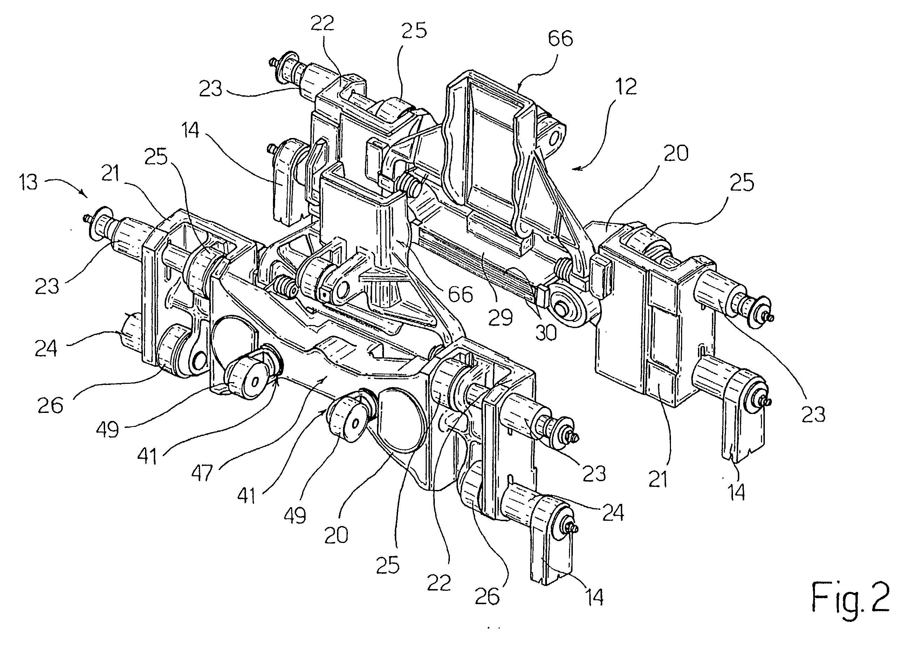

Each jaw 12 and counterjaw 13 (Figure 2) comprises a main body 20 elongated in a direction perpendicular to path A and parallel to walls 6, 7 of frame 4; each body 20 has respective end projections 21, 22, each having a first and second projecting pin 23, 24 spaced apart and having respective axes parallel to the main dimension of body 20; rods 14 pivot on pins 23, 24 of jaws 12 and counterjaws 13, so as to connect the pins 23 of one jaw/counterjaw to the pins 24 of the adjacent jaw/counterjaw; and jaws 12 and counterjaws 13 comprise respective pairs of guide rollers 25, 26, which are mounted inside projections 21, 22, coaxially with pins 23, 24, and roll along cams 15, 16 (Figure 1).

Each jaw 12 (Figure 2) comprises an induction heating element 29 fitted to main body 20 crosswise to the feed path A of tube 3, and comprising a pair of straight, parallel, front active surfaces 30.

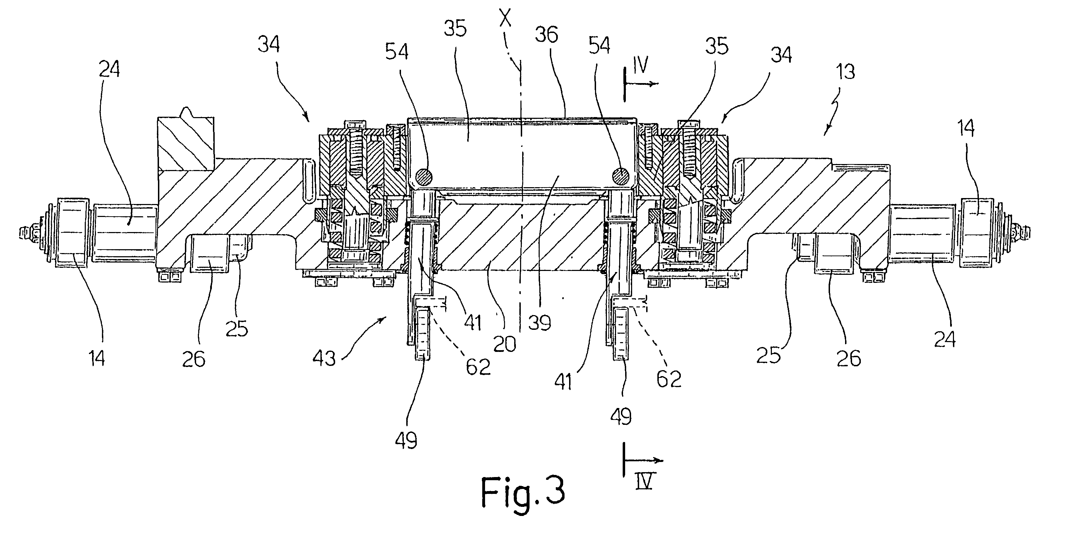

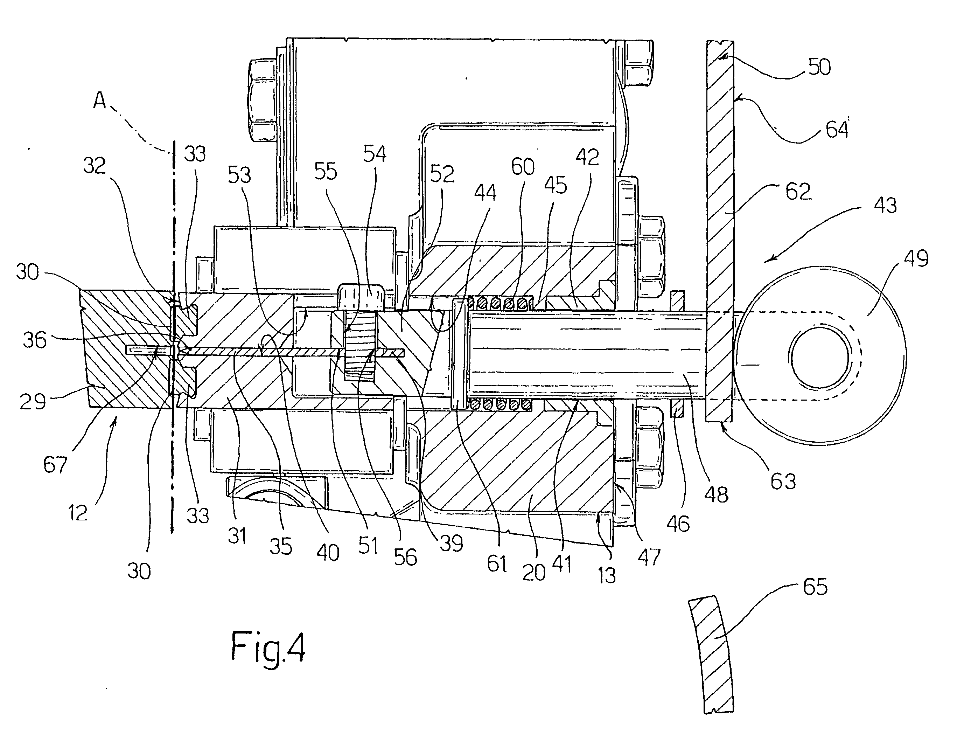

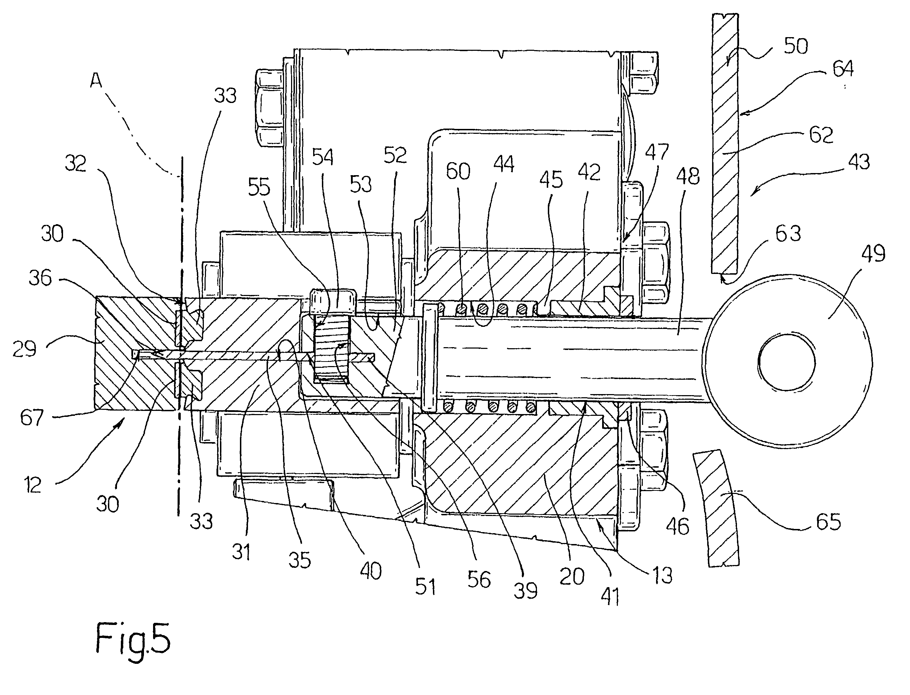

Instead of heating element 29, each counterjaw 13 (Figures 4 and 5) comprises a pressure bar 31; and the heating element 29 of each jaw 12 and the bar 31 of the corresponding counterjaw 13 cooperate with each other to grip tube 3 under pressure at a respective transverse band 17 and heat seal the packaging material. On a front surface 32 facing the corresponding jaw 12 in use, bar 31 has a pair of pads 33 made of relatively flexible elastomeric material, and which cooperate with the packaging material in opposition to the active surfaces 30 of heating element 29. The pressure bar 31 of each counterjaw 13 is fitted to respective main body 20 by means of two elastic end connecting devices 34 (Figure 3) of the type described, for example, in EP-A-0 887 269, and which are allowed a certain amount of yield in a direction X perpendicular to the plane defined by the axes of pins 23, 24, and defining, in use, the direction in which pressure is exerted on tube 3 by each jaw-counterjaw pair, and the cutting direction of the packaging material.

Each counterjaw 13 comprises a cutter 35 for cutting tube 3 at a sealing band 17 and detaching from tube 3 a formed packet coming off forming chains 10, 11 and for conversion into a respective package 2. As counterjaws 13 and respective cutters 35 are obviously identical, the following description refers to one counterjaw 13 only.

With reference to Figures 3 to 5, cutter 35 is flat and rectangular, is elongated along the major dimension of counterjaw 13, and comprises a front cutting edge 36 which projects from counterjaw 13 during the cutting operation. More specifically, cutter 35 is housed to slide inside a slit 40 in the middle of pressure bar 31, and is secured at the ends, close to an edge 39 opposite cutting edge 36, to respective tappet elements 41 fitted to slide, inside respective bushes 42, through main body 20 in a direction parallel to direction X, and forming part of a cam actuating device 43 described in detail later on. More specifically, each bush 42 is fitted integrally, inside a respective through seat 44 of main body 20 having an axis parallel to direction X, between a radially inner, annular projection 45 of seat 44, and a rear surface 47 of main body 20 at the opposite end to front surface 32 of pressure bar 31.

Each tappet element 41 comprises a cylindrical rod 48, which in turn comprises an idle end cam-follower roller 49 cooperating with a respective cam element 50 (described in detail later on) of the actuating device 43 fixed to frame 4, and a diametrical slit 51 formed in a free end portion 52 of rod 48 located at the opposite end to roller 49, and which projects axially from main body 20 and is housed loosely in a cavity 53 of pressure bar 31. Slit 51 is engaged by edge 39 of cutter 35; and cutter 35 is fixed rigidly to each of tappet elements 41 by a screw 54, which is screwed inside a radial hole 55 formed in rod 48 and intersecting slit 51, and engages a respective through hole 56 in cutter 35. Each tappet element 41 also comprises a stop element defined by a washer 46 fitted to rod 48 and which rests against rear surface 47 of main body 20 when respective cutter 35 is in the cutting position (Figure 5).

Each tappet element 41 is movable between a withdrawn limit position (Figure 4) wherein free end portion 52 partly engages cavity 53 in pressure bar 31, and a forward limit position wherein free end portion 52 rests against an end surface of cavity 53 perpendicular to direction X. In the withdrawn and forward positions, tappet elements 41 keep respective cutter 35 in a rest position (Figure 4) and a cutting position (Figure 5) respectively. In the rest position, |the cutting edge 36 of cutter 35 is housed inside pressure bar 31 of counterjaw 13; and, in the cutting position, cutting edge 36 projects from counterjaw 13 to cut the packaging material of a respective sealing band 17 of tube 3.

Actuating device 43 also comprises, for each tappet element 41, a garter spring 60 wound coaxially about rod 48, housed inside respective seat 44 of main body 20, and interposed between projection 45 and an outer annular flange 61 of rod 48, so as to push tappet element 41 axially into the forward position corresponding to the cutting position of respective cutter 35 (Figure 5).

An important aspect of the present invention is that each cam element 50 is defined by a section 62 extending along path Q, and which cooperates with rollers 49 of respective tappet elements 41, in opposition to respective springs 60, to keep tappet elements 41 in the withdrawn position, and therefore each cutter 35 in the rest position, and has a through opening 63 enabling cutters 35 to be pushed by springs 60 into the cutting position.

More specifically, each section 62 is positioned facing rear surfaces 47 of counterjaws 13, extends between rollers 49 of respective tappet elements 41 and counterjaws 13, and therefore has a rolling surface 64, along which respective rollers 49 run, facing away from counterjaws 13.

At work portion Q1 of path Q, sections 62 are substantially straight and vertical. Openings 63 are defined downstream by respective turn-in end portions 65 of sections 62, which curve slightly towards counterjaws 13 and define respective lead-in portions for rollers 49 to restore tappet elements 41 gradually to the withdrawn position, and cutters 35 to the rest position, following the cutting operation, while at the same time compressing springs 60. More specifically, turn-in portions 65 project towards counterjaws 13 with respect to the adjacent portions of respective sections 62, and are concave towards counterjaws 13.

Jaws 12 and counterjaws 13 comprise respective devices 66 (not forming part of the present invention and therefore not described in detail) for controlling the volume of packages 2 being formed.

Operation of unit 1 as regards formation and sealing of the packages is known and therefore not described in detail.

Very briefly, each jaw 12 and counterjaw 13 interact cyclically with tube 3 of packaging material according to the law of motion imposed by cams 15, 16. After a first step, in which tube 3 is gradually contacted and compressed and the packaging material is folded locally to form a flat transverse sealing band 17, jaw 12 and counterjaw 13 reach portions P1, Q1 of respective paths P, Q, along which maximum gripping pressure is exerted on tube 3 and heating element 29 of jaw 12 is supplied to heat seal the packaging material along two sealing lines defined by active surfaces 30 of heating |element 29 (Figure 4). In the course of the above steps, cutter 35 is kept in the Figure 4 rest position by tappet elements 41 interacting with respective sections 62 and so compressing springs 60.

At the same time, volume-control devices 66 interact with the lateral surface of the packet being formed to impose a predetermined shape, which is assisted by the presence of preformed bend lines on the packaging material.

Before jaw 12 and counterjaw 13 release the packaging material, rollers 49 of tappet elements 41 click inside openings 63 of cam elements 50. The releasing of rollers 49 from respective sections 62 releases springs 60, which click respective tappet elements 41 into the forward position to push cutter 35 out of pressure bar 31 and so cut the packaging material along a transverse cutting line between the two sealing lines (Figure 5). On cutting through the material, the cutting edge 36 of cutter 35 is received inside a corresponding slit 67 in jaw 12.

Once the material is cut, jaw 12 and counterjaw 13 continue along paths P and Q to bring rollers 49 of tappet elements 41 into contact with turn-in portions 65 of sections 62, along which, tappet elements 41 are moved into the withdrawn position, thus compressing springs 60 and restoring cutter 35 to the rest position inside pressure bar 31.

Jaw 12 and counterjaw 13 are withdrawn, and package 2 detached from the continuous tube 3 of packaging material and still in the form of a pillow pack is guided to a follow-up processing station, e.g. a folding station, where it is formed into the finished shape.

The advantages of unit 1 according to the present invention will be clear from the foregoing description.

In particular, the cutting operation is extremely fast by being performed by releasing springs 60 at openings 63 in sections 62.

Moreover, by virtue of cutters 35 being activated by springs 60 simply pushing respective tappet elements 41 in direction X at openings 63 in sections 62, cutters 35 are subjected to no transverse forces, thus reducing wear and increasing the working life of the cutting mechanism components.

Moreover, cutters 35 are so assembled as to permit fast, easy, perfectly safe replacement in the event of wear. That is, screws 54 are easily accessible at all times, and need simply be removed to extract cutter 35 from the front. Each cutter 35 is also subjected to elastic forces, which are transmitted to sections 62 via tappet elements 41, so that the removal of screws 54 involves no risk to the operator.

Clearly, changes may be made to unit 1 as described herein without, however, departing from the scope of the present invention.

In particular, as opposed to opening 63, each section 62 may comprise any break region, e.g. a contoured recess, enabling release of springs 60 in cutting direction X.

Screws 54 for fastening cutters 35 may be replaced by any appropriate fastening element, e.g. a fast-fit fastening element.

Finally, cutters 35 may be carried by jaws 12 as opposed to counterjaws 13.

## Claims

1. A packaging unit (1) for continuously producing sealed packages (2) of a pourable food product from a tube (3) of packaging material fed along a vertical feed path (A) and filled with said food product; said unit (1) comprising :
- two forming chains (10, 11) arranged side by side, and each having a respective number of jaws (12, 13) connected in articulated manner to one another and traveling along a respective endless conveying path (P, Q); said conveying paths (P, Q) comprising respective work portions (P1, Q1) adjacent to said feed path (A) and extending substantially symmetrically on opposite sides of the feed path (A), so that respective equally spaced transverse bands (17) of said tube (3) are gripped under pressure between pairs of corresponding jaws (12, 13) of said chains (10, 11);
- sealing means (29, 30, 31) carried by said jaws (12, 13) of said chains (10, 11) to seal the packaging material at said transverse bands (17) of said tube (3);
- cutting means (35) for detaching the formed packages (2) from said tube (3) by transversely cutting the respective said transverse bands (17); said cutting means comprising a number of cutters (35) carried by respective said jaws (13) of a first (11) of said chains (10, 11), so as to slide in a cutting direction (X) between a rest position, in which said cutters (35) are housed inside the respective said jaws (13), and a cutting position, in which said cutters (35) project frontwards from the jaws (13); and
- a cam actuating device (43) for controlling the movement of said cutters (35); said actuating device (43) comprising cam means (50) fitted in a fixed position to a supporting structure (4) of said unit (1), and, for each said jaw (13) of said first chain (11), at least one tappet element (41) integral with the respective said cutter (35) and interacting with said cam means (50) and with respective restoring means (60) to move the cutter (35) between said rest position and said cutting position;
**characterized in that** said restoring means comprise elastic means (60) interposed between each said tappet element (41) and the respective said jaw (13), and exerting thrust on the tappet element (41) to move the respective said cutter (35) into said cutting position; and **in that** said cam means (50) comprise at least one cam element (62) extending at least along the work portion (Q1) of the conveying path (Q) defined by said first chain (11), cooperating with said tappet elements (41) to keep the respective said cutters (35) in said rest positions in opposition to said elastic means (60), and having a profile with at least one break region (63) to enable said cutters (35) to be moved into said cutting position by the respective said elastic means (60).

2. A unit as claimed in Claim 1, **characterized in that** said break region is defined by a through opening (63) in said cam element (62).

3. A unit as claimed in Claim 2, **characterized in that** said opening (63) is defined downstream by a contoured turn-in portion (65) of said cam element (62) defining a lead-in portion for moving said tappet elements (41) in opposition to the respective said elastic means (60) and restoring the respective said cutters (35) to said rest position.

4. A unit as claimed in any one of the foregoing Claims, **characterized in that** each said tappet element (41) comprises a rod (48) mounted to slide through the respective said jaw (13) in said cutting direction (X), and having an end cam-follower roller (49) cooperating in rolling manner with said cam element (62); and **in that** said cam element (62) extends between said cam-follower rollers (49) and said jaws (13) of said first chain (11).

5. A unit as claimed in Claim 4, **characterized in that** said turn-in portion (65) of said cam element (62) is curved and projects towards said jaws (13) of said first chain (11) with respect to the adjacent portions of the cam element (62).

6. A unit as claimed in Claim 5, **characterized in that** said turn-in portion (65) of said cam element (62) is concave towards said jaws (13) of said first chain (11).

7. A unit as claimed in any one of the foregoing Claims, **characterized in that** each said jaw (13) of said first chain (11) comprises a main body (20), and a pressure bar (31) connected to said main body (20) by elastic connecting means (34); each said tappet element (41) being mounted to slide through said main body (20); and each said cutter (35) being housed in sliding manner inside a slit (40) in the middle of said pressure bar (31).

8. A unit as claimed in Claim 7, **characterized by** comprising fastening means (54) for fastening each said cutter (35) to an end portion (52) of a respective said rod (48) projecting axially from said main body (20) of the respective said jaw (13) of said first chain.

9. A unit as claimed in any one of the foregoing Claims, **characterized in that** said actuating device (43) comprises a pair of cam elements (62); and, for each said jaw (13) of said first chain (11), two tappet elements (41) fixed close to opposite ends of a respective said cutter (35).

## Patentansprüche

1. Verpackungsanlage (1) zum kontinuierlichen Herstellen von versiegelten Verpackungen (2) von fließfähigen Nahrungsmitteln aus einem Verpackungsmaterialschauch (3), der entlang eines vertikalen Vorschubwegs (A) vorgeschoben und mit dem Nahrungsmittel gefüllt wird, wobei die Einheit (1) folgendes aufweist:
- zwei Formketten (10, 11), die nebeneinander angeordnet sind und eine entsprechende Anzahl von Backen (12, 13) aufweisen, die über Gelenke miteinander verbunden sind und sich entlang entsprechender Endlosförderpfade (P, Q) bewegen; wobei die Förderpfade (P, Q) entsprechende Arbeitsabschnitte (P1, Q1) aufweisen, die an den Vorschubweg (A) angrenzen und sich im Wesentlichen symmetrisch auf gegenüberliegenden Seiten von Vorschubweg (A) erstrecken, so dass entsprechende gleich beabstandete Querbänder (17) des Schlauches (3) unter Druck zwischen Paaren von entsprechenden Backen (12, 13) der Ketten (10, 11) eingespannt werden;
- Versiegelmittel (29, 30, 31), die von den Backen (12, 13) der Ketten (10, 11) gehalten werden, um das Verpackungsmaterial an den Querbändern (7) des Schlauchs (3) zu versiegeln;
- Schneidemittel (35) zum Abtrennen der geformten Packungen (2) vom Schlauch (3) durch transversales Schneiden der Querbänder (17); wobei die Schneidemittel eine Anzahl von Schneidwerkzeugen (35) aufweisen, die von den entsprechenden Backen (13) auf einer ersten (11) der Ketten (10, 11) gehalten werden, um in einer Schneiderichtung (X) zwischen einer Ruheposition, in der die Schneidwerkzeuge sich innerhalb der entsprechenden Backen (13) befinden, und einer Schneideposition, in der die Schneidwerkzeuge (35) aus den Backen (13) nach vorne hervorstehen, zu gleiten; und
- eine Betätigungs-Nockenvorrichtung (43) zum Steuern Bewegung der Schneidwerkzeuge (35); wobei die Betätigungsvorrichtung (43) Nockenmittel (50), die in einer festen Position an eine Haltestruktur (4) von Einheit (1) angebracht sind, aufweist, und für jede Backe (13) der ersten Kette (11) wenigstens ein Mitnehmerelement (41), das mit dem entsprechen Schneidwerkzeug (35) integriert ist und mit den Nockenmitteln (50) und entsprechenden Einsatzmitteln (60) interagiert, um die Schneidwerkzeuge (35) zwischen der Ruheposition und der Schneideposition zu bewegen;
**dadurch gekennzeichnet, dass** die Einsatzmittel elastische Mittel (60) aufweisen, die sich zwischen jedem Mitnehmerelement (41) und der entsprechenden Backe (13) befinden und eine Schubkraft auf das Mitnehmerelement (41) ausüben, um das entsprechende Schneidwerkzeug (35) in die Schneideposition zu bewegen; und dadurch dass das Nockenmittel (50) wenigstens ein Nockenelement (62) aufweist, das sich wenigstens entlang der Arbeitsposition (Q1) des von der Kette (11) definierten Pfads (Q) erstreckt, das mit den Mitnehmerelementen (41) zusammenwirkt, um die entsprechenden Schneidwerkzeuge (35) in der Ruheposition zu halten entgegen die elastischen Mittel (60) und das ein Profil mit wenigstens einem Durchbruchabschnitt (63) hat, um zu ermöglichen, dass die Schneidwerkzeuge (35) von den elastischen Mitteln (60) in die Schneideposition bewegt werden.

2. Einheit nach Anspruch 1, **dadurch gekennzeichnet, dass** der Durchbruchabschnitt durch eine durchgehende Öffnung (63) im Nockenelement (62) definiert ist.

3. Einheit nach Anspruch 2, **dadurch gekennzeichnet, dass** die Öffnung (63) unten durch einen profilierten Einbiege-Abschnitt (65) des Nockenelements (62) definiert wird, der einen Einführabschnitt definiert, um die Mitnehmerelemente (41) entgegengesetzt zu den elastischen Mitteln (60) zu bewegen und die jeweiligen Schneidwerkzeuge (35) in die Ruheposition zu bringen.

4. Einheit nach einem voranstehenden Ansprüche, **dadurch gekennzeichnet, dass** jedes Mitnehmerelement (41) eine Stange (48) aufweist, die gleitbar durch die entsprechende Backe (13) in der Schneidrichtung (X) angebracht ist und die eine End-Gleitrolle (49) hat, die auf rollende Art und Weise mit dem Nockenelement (62) zusammenwirkt; und dadurch dass das Nockenelement (62) sich zwischen den Gleitrollen (49) und den Backen (13) der ersten Kette (11) erstreckt.

5. Einheit nach Anspruch 4, **dadurch gekennzeichnet, dass** der Einbiege-Abschnitt (65) des Nockenelements (62) gebogen und zu den Backen (13) der ersten Kette hin hervorsteht mit Bezug auf die angrenzenden Abschnitte des Nockenelements (62).

6. Einheit nach Anspruch 5, **dadurch gekennzeichnet, dass** der nach innen gebogene Abschnitt (65) des Nockenelements (62) zu den Backen (13) der ersten Kette (11) hin konkav ist.

7. Einheit nach einem der voranstehenden Ansprüche, **dadurch gekennzeichnet, dass** jede Backe (13) der ersten Kette (11) einen Hauptkörper (20) und einen Druckbalken (31) aufweist, der mit dem Hauptkörper (20) durch elastische Verbindungsmittel (34) verbunden ist; wobei jedes Mitnehmerelement (41) gleitbar durch Hauptkörper (20) angebracht ist; und wobei jedes Schneidwerkzeug (35) gleitbar innerhalb eines Schlitzes (40) in der Mitte des Druckbalken (31) angebracht ist.

8. Einheit nach Anspruch 7, **gekennzeichnet durch** das Aufweisen von Befestigungsmitteln (54) zum Befestigen jedes Schneidwerkzeug (35) an einem Endabschnitt (52) einer entsprechenden Stange (48), die axial vom Hauptkörper (20) der entsprechenden Backe (13) der ersten Kette (11) hervorsteht.

9. Einheit nach einem der voranstehenden Ansprüche, **dadurch gekennzeichnet, dass** die Betätigungsvorrichtung (43) ein Paar von Nockenelementen (62) aufweist; und dass für jede Backe (13) der ersten Kette (11) zwei Mitnehmerelemente (41) nahe gegenüberliegender Enden eines entsprechenden Schneidwerkzeugs (35) angebracht sind.

## Revendications

1. Unité d'emballage (1) pour la production continue d'emballages scellés (2) d'un produit alimentaire versable à partir d'un tube (3) de matériau d'emballage avancé le long d'un chemin d'alimentation vertical (A) et rempli avec le dit produit alimentaire, la dite unité (1) comprenant :
deux chaînes de formage (10, 11) agencées côte à côte et portant chacune un nombre respectif de mâchoires (12, 13), connectées de manière articulée les unes aux autres et se déplaçant le long d'un chemin de transport sans fin respectif (P, Q), les dits chemins de transport (P, Q) comprenant des parties de travail respectives (P1, Q1) adjacentes au dit chemin d'avance (A) et qui s'étendent sensiblement symétriquement de part et d'autre du chemin d'avance (A), de sorte que des bandes transversales équidistantes respectives (17) du dit tube (3) sont serrées sous pression entre des paires de mâchoires correspondantes (12, 13) des dites chaînes (10, 11) ;
un dispositif de soudage (29, 30, 31) porté par les dites mâchoires (12, 13) des dites chaînes (10, 11) pour souder le matériau d'emballage à l'endroit des dites bandes transversales (17) du dit tube (3) ;
un dispositif de coupe (35) pour détacher les emballages formés (2) du dit tube (3) par coupe transversale des dites bandes transversales respectives (17), le dit dispositif de coupe comprenant un certain nombre d'éléments de coupe (35) portés par les dites mâchoires respectives (13) d'une première (11) des dites chaînes (10, 11) de façon à coulisser dans une direction de coupe (X) entre une position inactive, dans laquelle les dits éléments de coupe (35) sont logés à l'intérieur des dites mâchoires respectives (13), et une position de coupe dans laquelle les dits éléments de coupe (35) font saillie vers l'avant à partir des mâchoires (13) ; et
un dispositif de commande à came (43) pour commander le mouvement des dits éléments de coupe (35), le dit dispositif de commande (43) comprenant un élément de came (50) monté dans une position fixe sur une structure de support (4) de la dite unité (1), et, pour chaque dite mâchoire (13) de la dite première chaîne (11), au moins un élément de poussoir (41) solidaire du dit dispositif de coupe respectif (35) et en interaction avec le dit élément de came (50) et avec un dispositif de sollicitation respectif (60) pour déplacer le dispositif de coupe (35) entre la dite position inactive et la dite position de coupe ;
**caractérisée en ce que** le dit dispositif de sollicitation comprend des moyens élastiques (60) interposés entre chaque dit élément de poussoir (41) et la dite mâchoire respective (13) et exerçant une poussée sur l'élément de poussoir (41) de manière à amener le dit dispositif de coupe respectif (35) à la dite position de coupe ; et **en ce que** le dit dispositif de came (50) comprend au moins un élément de came (62) s'étendant au moins le long de la partie de travail (Q1) du chemin de transport (Q) défini par la dite première chaîne (11), coopérant avec les dits éléments de poussoir (41) pour maintenir les dits dispositifs de coupe respectifs (35) dans les dites positions inactives en opposition aux dits moyens élastiques (60), et ayant un profil qui présente au moins une région d'interruption (63) pour permettre aux dits moyens élastiques respectifs (60) d'amener les dits dispositifs de coupe (35) à la dite position de coupe.

2. Unité selon la revendication 1, **caractérisée en ce que** la dite région d'interruption est définie par un trou traversant (63) ménagé dans le dit élément de came (62).

3. Unité selon la revendication 2, **caractérisée en ce que** le dit trou (63) est défini en aval par une partie profilée en saillie vers l'intérieur (65) du dit élément de came (62), définissant une rampe pour déplacer les dits éléments de poussée (41) en opposition aux dits moyens élastiques respectifs (60) et ramener les dits dispositifs de coupe respectifs (35) à la dite position de repos.

4. Unité selon une quelconque des revendications précédentes, **caractérisée en ce que** chaque dit élément de poussoir (41) comprend une tige (48) montée de manière à coulisser à travers la dite mâchoire respective (13) dans la dite direction de coupe (X) et portant un galet d'extrémité palpeur de came (49) qui coopère de manière roulante avec le dit élément de came (62) ; et dans laquelle le dit élément de came (62) s'étend entre les dits galets palpeurs de came (49) et les dites mâchoires (13) de la dite première chaîne (11).

5. Unité selon la revendication 4, **caractérisée en ce que** la dite partie profilée (65) du dit élément de came (62) est courbe et fait saillie vers les dites mâchoires (13) de la dite première chaîne (11) par rapport aux parties adjacentes de l'élément de came (62).

6. Unité selon la revendication 5, **caractérisée en ce que** la dite partie profilée vers l'intérieur (65) du dit élément de came (62) est concave vers les dites mâchoires (13) de la dite première chaîne (11).

7. Unité selon une quelconque des revendications précédentes, **caractérisée en ce que** chaque dite mâchoire (13) de la dite première chaîne (11) comprend un corps principal (20), et une barre de pression (31) reliée au dit corps principal (20) par des moyens de liaison élastiques (34), chaque dit élément de poussoir (41) étant monté de manière à coulisser à travers le dit corps principal (20), et chaque dit dispositif de coupe (35) étant logé de manière coulissante dans une fente (40) prévue au milieu de la dite barre de pression (31).

8. Unité selon la revendication 7, **caractérisée en ce qu'**elle comprend des moyens de fixation (54) pour fixer chaque dit dispositif de coupe (35) à une partie d'extrémité (52) d'une dite tige respective (48) faisant saillie axialement à partir du dit corps principal (20) de la dite mâchoire respective (13) de la dite première chaîne.

9. Unité selon une quelconque des revendications précédentes, **caractérisée en ce que** le dit dispositif de commande (43) comprend deux éléments de came (62) et, pour chaque dite mâchoire (13) de la dite première chaîne (11), deux éléments de poussoir (41) fixés près des extrémités opposées d'un dit dispositif de coupe respectif (35).
